(19) Europäisches Patentamt
European Patent Office
Office européen des brevets

(11) Veröffentlichungsnummer: **0 453 958 A2**

# (12) EUROPÄISCHE PATENTANMELDUNG

(21) Anmeldenummer: **91106202.4**

(51) Int. Cl.$^5$: **C08J 5/18**

(22) Anmeldetag: **18.04.91**

(30) Priorität: **27.04.90 DE 4013574**

(43) Veröffentlichungstag der Anmeldung:
**30.10.91 Patentblatt 91/44**

(84) Benannte Vertragsstaaten:
**DE FR GB IT**

(71) Anmelder: **HOECHST AKTIENGESELLSCHAFT**
**Postfach 80 03 20**
**W-6230 Frankfurt am Main 80(DE)**

(72) Erfinder: **Frank, Detlef, Dr.**
**Anne-Frank-Strasse 18**
**W-6455 Erlensee(DE)**

(54) **Flächenhafter Formkörper und Verfahren zu seiner Herstellung.**

(57) Es wird ein flächenhafter Formkörper aus in der flüssigkristallinen Schmelze verarbeitbaren flüssigkristallinen Polymeren beschrieben. Er enthält weniger als $1x10^{-1}$, bevorzugt weniger als $2x10^{-2}$ Fließstörungen pro $cm^3$.

EP 0 453 958 A2

Die vorliegende Erfindung beschreibt einen flächenhaften Formkörper aus in der Schmelze verarbeitbaren flüssigkristallinen Polymeren sowie ein Verfahren zu dessen Herstellung durch Extrusion.

Aus der Schmelze verarbeitbare flüssigkristalline Polymere sind bereits bekannt und in "Polymer Liquid Cristals", Ciferi, Krigbaum, Meyer, Academic Press, 1982, und "High Modulus Polymers", Zachariades, Porter, Marcel Dekker Inc., 1988, beschrieben. Bei Polymeren der genannten Art handelt es sich normalerweise um vollaromatische Polyester, wie Polyestercarbonate, Polyesteramide, Polyesterimide und ähnlichen Polymeren oder um Blockpolymere mit einem Block auf Basis dieser Systeme. Eine bekannte Meßmethode, mit der die Existenz einer flüssigkristallinen Schmelze nachgewiesen werden kann, ist die Polarisationsmikroskopie, die ebenfalls in der einschlägigen Literatur beschrieben ist.

Flüssigkristalline Schmelzen besitzen die Eigenschaft, daß in ihnen die Molekularorientierung der Polymerketten nach verschiedenen Methoden, z.B. mechanisch oder durch Anlegen elektrischer oder magnetischer Felder, besonders einfach zu bewerkstelligen ist, wodurch es möglich ist, Formkörper mit stark erhöhten mechanischen Eigenschaften in einer oder in mehreren Orientierungsrichtungen zu erhalten. Dieses Verhalten der flüssigkristallinen Polymeren ist bedeutsam für ihre Weiterverarbeitung nach dem Verfahren der Spritzgußtechnik, aber es macht sie auch vor allem zur Herstellung von Fasern und Folien geeignet. Extrudiert man die Schmelze eines flüssigkristallinen Polymeren, z.B. aus der Breitschlitzdüse einer üblichen Folienextrusionsanlage, so ist bereits eine Orientierung des Polymeren in Maschinenrichtung (MD) zu beobachten, welche durch einen stärkeren Abzug der Schmelze von der Düse noch verstärkt werden kann.

Die US-A-4,161,470 beschreibt die Extrusion von flüssigkristallinen Polymeren, wie z.B. von Polykondensaten aus Hydroxybenzoesäure und Hydroxynaphtoesäure, zu Fasern und Folien. Ein besonderes Problem bei der Extrusion der flüssigkristallinen Polymeren besteht darin, daß sehr häufig eine Art von Fließstörungen in Form von Teilchen beobachtet wird, die als punktuelle morphologische Veränderungen bezeichnet werden könnten und die sich auf jeden Fall durch eine konventionelle Schmelzefiltration nicht entfernen lassen. Durch diese Fließstörungen kommt es nachteiligerweise bei der Orientierung des flüssigkristallinen Polymeren immer wieder zu Dünnstellen und im Extremfall sogar zu Löchern bei Folien oder Abrissen bei Fasern. Die besagten Fließstörungen sind damit verantwortlich für das Vorhandensein von Schwachstellen oder Sollbruchstellen, durch die ein Nachteil von flüssigkristallinen Polymeren, ihre normalerweise ohnehin geringe Weiterreißfestigkeit, noch verstärkt wird. Neben den mechanischen Eigenschaften werden auch elektrische Eigenschaften und Barriereeigenschaften durch die Fließstörungen wesentlich in Mitleidenschaft gezogen.

Aufgabe der vorliegenden Erfindung war es, die Anzahl der Fließstörungen wesentlich zu verringern oder diese ganz zu unterbinden und so die Produktionssicherheit bei der Extrusion von flüssigkristallinen Polymeren zu erhöhen sowie die Produkteigenschaften von aus flüssigkristallinen Polymeren hergestellten Formkörpern und deren Konstanz zu verbessern.

Diese Aufgabe wird gelöst durch einen Formkörper der eingangs genannten Art, dessen Kennzeichenmerkmal darin besteht, daß er weniger als $1 \cdot 10^{-1}$ Fließstörungen pro $cm^3$ enthält.

Als Fließstörungen sollen im Rahmen der Erfindung die vorher bereits erwähnten punktuellen morphologischen Veränderungen bezeichnet werden. Die Angabe $1 \cdot 10^{-1}$ Fließstörungen pro $cm^3$ entspricht etwa 5 Fließstörungen pro $m^2$ bei einer Folie mit einer Dicke von 50 $\mu$m.

Die flüssigkristallinen Polymeren, bestehen insbesondere aus immer wiederkehrenden Bausteinen folgender Art:

- X - Ar - ,

wobei X eine oder mehrere funktionelle Gruppen der folgenden Art symbolisieren soll: -COO- (Ester), -OCOO-(Carbonat), -CONH- (Säureamid), $=(CO)_2N$- (Imid) und wobei Ar ein oder mehrere aromatische Einheiten der folgenden Art: Phenylen, Naphthylen oder Einheiten, die durch die Kombination dieser beiden Einheiten nach folgendem Schema gebildet werden:

$Ar_1$ - $Ar_2$ oder $Ar_1$ - Y - $Ar_2$,

wobei Y eine der folgenden Gruppen: -O-, -S-, -CO-, $-SO_2$-oder aliphatische Kohlenwasserstoffe mit bis zu sechs C-Atomen darstellt

und wobei $Ar_1$ und $Ar_2$ gleiche oder unterschiedliche aromatische Einheiten der obengenannten Art bedeuten, beziehungsweise selbst Kombinationen dieser aromatischen Einheiten darstellen.

Die aromatischen Einheiten können darüber hinaus noch ein- oder mehrfach substituiert sein, wobei als Substituenten Alkyl- oder Arylgruppen mit 1 bis 20 C-Atomen oder Halogene in Frage kommen. Die Alkyl- oder Arylgruppen können ferner selbst teilweise oder auch vollständig halogeniert sein oder wahlweise über eine funktionelle Gruppe wie -O-, -S-, -CO- oder $-SO_2$- an die aromatischen Einheiten der Polymerhauptkette gebunden sein. Die vorstehende Aufzählung ist beispielhaft und soll die Erfindung nicht einschränken.

Im Rahmen der Erfindung besonders bevorzugte flüssigkristalline Polymere sind vollaromatische Polyester, die im wesentlichen aus zwei Einheiten I und II, einem 4-Oxybenzoesäurerest und einem 6-Oxy-2-naphtoesäurerest, aufgebaut sind, die in der DE-A-28 44 817 ausführlich beschrieben sind.

Formkörper der erfindungsgemäßen Art, die weniger als $1 \cdot 10^{-1}$ Fließstörungen pro $cm^3$ enthalten und die aus den vorstehenden flüssigkristallinen Polymeren bestehen werden hergestellt, indem die Schmelze des flüssigkristallinen Polymeren bei Temperaturen wesentlich oberhalb der flüssigkristallinen Schmelztemperatur einer Hochtemperaturschmelzefiltration unterzogen wird. Als wesentlich höhere Temperaturen werden Temperaturen im Bereich von 30 bis 150°C, vorzugsweise von 40 bis 100°C oberhalb der flüssigkristallinen Schmelzetemperatur, angesehen. Die flüssigkristalline Schmelztemperatur ist für die verschiedenen Polymeren unterschiedlich. Für die bevorzugten flüssigkristallinen Polymeren liegt sie im Bereich von 250 bis 370°C.

Die Hochtemperaturschmelzefiltration wird erfindungsgemäß in einem Schmelzefilter bei einer Temperatur im Bereich von 300 bis 410°C, vorzugsweise von 330 bis 400°C durchgeführt. Überraschend hat sich gezeigt, daß sich nach dem beschriebenen Verfahren keine Fließstörungen in Form von punktuellen morphologischen Veränderungen oder sonstigen punktuellen Irregularitäten des Polymeren mehr beobachten lassen. Die hieraus resultierenden hohen Schmelzetemperaturen erlauben überraschend darüber hinaus eine deutliche Erniedrigung der Düsentemperatur, ohne daß unerwünschte Ablagerungen (Ausfrierungen) des flüssigkristallinen Polymeren in der Düse beobachtet werden.

***Ausführungsbeispiel:***

Aus dem Flüssigkristallpolyester Vectra$^R$ A 900 der Firma Hoechst Celanese Corp., einem vollaromatischen Polykondensat aus p-Oxybenzoesäure und 6-Oxy-2-naphthoesäure, wurde durch Schmelzeextrusion auf einer konventionellen Flachfolienextrusionsanlage eine Folie hergestellt. Hierzu wurde ein Extruder mit einer Schnecke von 30 mm Durchmesser und eine Flachdüse von 330 mm Breite sowie einem Düsenspalt mit einer Öffnung von 0,5 mm verwendet. Dem Extruder und der Düse wurde ein Schmelzefilter mit einem mittleren Porendurchmesser von 15 µm zwischengeschaltet. Vor der Extrusion wurde das flüssigkristalline Polymer über eine Zeit von etwa einer Stunde bei 140 °C getrocknet. Die möglichen Düsentemperaturen wurden durch visuelle Beurteilung der Folie ermittelt. Bei der unteren Düsentemperatur handelt es sich um die Temperatur, bei der noch keine Ausfrierungen (Ablagerungen) des Polymeren im Düsenspalt beobachtet werden, während die obere Düsentemperatur den Wert angibt, bei dem die Folie noch mit homogener Folienoberfläche, das heißt ohne Überstrukturen erhalten wird. Die Ergebnisse von drei Versuchen teilweise ohne Schmelzefilter, teilweise mit zwischengeschaltetem Schmelzefilter, aber bei verschiedenen Filtertemperaturen, sind in der nachfolgenden Tabelle angegeben.

| Probe Nr. | Schmelzefilter | Filtertemperatur °C | untere Düsentemperatur °C | obere Düsentemperatur °C | Foliendicke µm | Fließstörungen Zahl/m² |
|---|---|---|---|---|---|---|
| 1 | ohne | - | 280 | 300 | 50 | 50 |
| 2 | mit | 300 | 280 | 300 | 50 | 55 |
| 3 | mit | 350 | 240 | 300 | 50 | < 1 |

## Patentansprüche

1. Flächenhafter Formkörper aus in der flüssigkristallinen Schmelze verarbeitbaren flüssigkristallinen Polymeren, dadurch gekennzeichnet, daß er weniger als $1 \times 10^{-1}$ bevorzugt weniger als $2 \times 10^{-2}$ Fließstörungen pro $cm^3$ enthält.

2. Formkörper nach Anspruch 1, dadurch gekennzeichnet, daß er als Hauptbestandteil ein flüssigkristallines Polymeres enthält aus immer wiederkehrenden Bausteinen folgender Art:

- X - Ar - ,

wobei X eine oder mehrere funktionelle Gruppen der folgenden Art symbolisieren soll: -COO- (Ester), -OCOO-(Carbonat), -CONH- (Säureamid), =$(CO)_2N$- (Imid) und wobei Ar ein oder mehrere aromatische Einheiten der folgenden Art: Phenylen, Naphthylen oder Einheiten, die durch die Kombination dieser beiden Einheiten nach folgendem Schema gebildet werden:

$Ar_1$ - $Ar_2$ oder $Ar_1$ - Y - $Ar_2$,

wobei Y eine der folgenden Gruppen: -O-, -S-, -CO-, $-SO_2$-oder aliphatische Kohlenwasserstoffe mit bis zu sechs C-Atomen darstellt und wobei $Ar_1$ und $Ar_2$ gleiche oder unterschiedliche aromatische Einheiten der obengenannten Art bedeuten, beziehungsweise selbst Kombinationen dieser aromatischen Einheiten darstellen.

**3.** Formkörper nach Anspruch 1, dadurch gekennzeichnet, daß er als Hauptbestandteil ein Flüssigkristallpolymer aus immer wiederkehrenden Bausteinen I und II enthält, worin

I 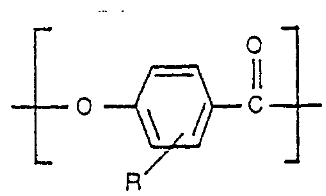 ist, und

II 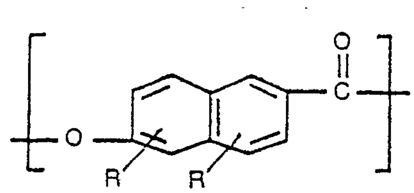 ist

sowie der genannten Polyester 10-90 Mol % des Bestandteils I und 10-90 Mol % des Bestandteils II enthält und zur Ausbildung einer flüssigkristallinen Schmelze unterhalb von 350 °C, bevorzugt unterhalb von 325 °C, besonders bevorzugt unterhalb von 300 °C in der Lage ist und die Gruppe R Wasserstoff bedeutet.

**4.** Formkörper nach Anspruch 1, dadurch gekennzeichnet, daß er als Hauptbestandteil ein Flüssigkristallpolymer aus immer wiederkehrenden Bausteinen I, II und III enthält worin

I 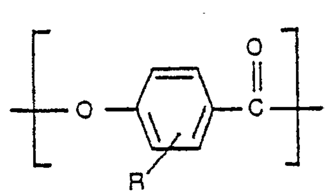 ist

II 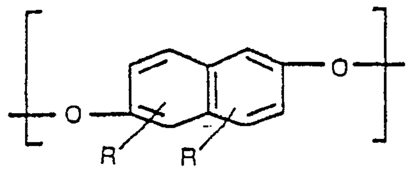 ist und

III 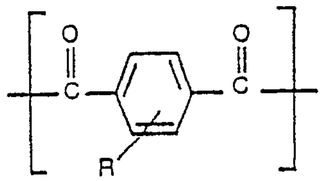 ist

sowie der genannte Polyester 30-70 Mol % des Bestandteils I enthält und zur Ausbildung einer flüssigkristallinen Schmelze unterhalb von 350 °C, bevorzugt unterhalb von 325 °C, besonders bevorzugt unterhalb von 300 °C in der Lage ist und die Gruppe R Wasserstoff bedeutet.

5. Formkörper nach Anspruch 1, dadurch gekennzeichnet, daß er als Hauptbestandteil ein Flüssigkristallpolymer aus immer wiederkehrenden Bausteinen I, II, III, IV und V enthält, worin

I 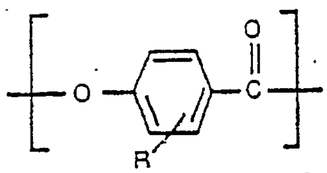 ist

II 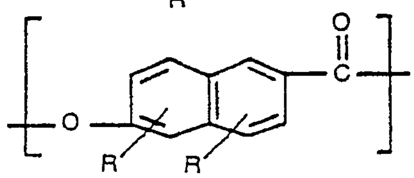 ist

III 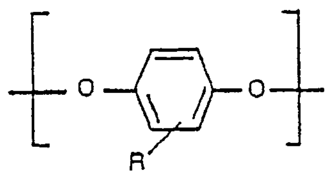 ist

IV 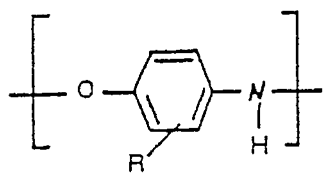 ist und

V 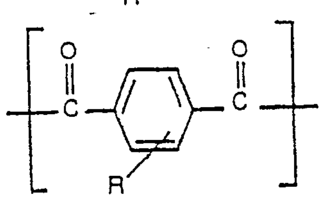 ist

sowie der genannte Polyester 30-70 Mol % des Bestandteils I enthält und zur Ausbildung einer flüssigkristallinen Schmelze unterhalb von 350 °C, bevorzugt unterhalb von 325 °C, besonders bevorzugt unterhalb von 300 °C in der Lage ist und die Gruppe R Wasserstoff bedeutet.

6. Formkörper nach Anspruch 1, dadurch gekennzeichnet, daß er als Hauptbestandteil ein Flüssigkristallpolymer aus immer wiederkehrenden Bausteinen I, II, III, IV und V enthält, worin

I 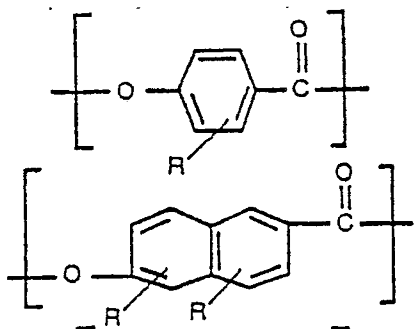 ist

II ist

III 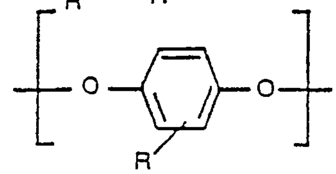 ist

IV 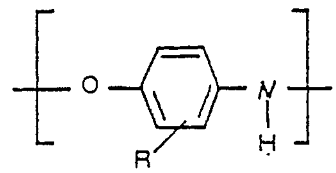 ist und

V 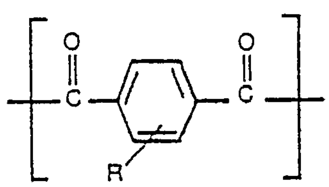 ist

sowie der genannte Polyester 30-70 Mol % des Bestandteils II enthält und zur Ausbildung einer flüssigkristallinen Schmelze unterhalb von 350 °C, bevorzugt unterhalb von 325 °C, besonders bevorzugt unterhalb von 300 °C in der Lage ist und die Gruppe R Wasserstoff bedeutet.

**7.** Formkörper nach einem der Ansprüche 2-6, dadurch gekennzeichnet, daß die aromatischen Einheiten ein- oder mehrfach substituiert sind, wobei die Substituenten Alkyl- oder Arylgruppen mit 1 bis 20 C-Atomen oder Halogene sind und wobei die Alkyl- oder Arylgruppen wahlweise selbst teilweise oder auch vollständig halogeniert sind oder wahlweise über eine funktionelle Gruppe wie -O-, -S-, -CO- oder $-SO_2-$ an die aromatischen Einheiten der Polymerhauptkette gebunden sind.

**8.** Formkörper nach einem der Ansprüche 1 bis 7, dadurch gekennzeichnet, daß er die Form einer Folie mit einer Dicke im Bereich von 5 bis 1000 µm, bevorzugt von 10 bis 500 µm, besonders bevorzugt von 20 bis 200 µm, besitzt.

**9.** Verfahren zur Herstellung eines Formkörpers nach einem der Ansprüche 1 bis 8 durch Schmelzextrusion mittels eines Extruders und einer nachgeschalteten Düse, dadurch gekennzeichnet, daß die Schmelze des flüssigkristallinen Polymeren bei Temperaturen wesentlich oberhalb der flüssigkristallinen Schmelzetemperatur in einem dem Extruder und der Düse zwischengeschalteten Schmelzefilter einer Hochtemperaturschmelzefiltration unterzogen wird.

**10.** Verfahren nach Anspruch 9, dadurch gekennzeichnet, daß die Hochtemperaturschmelzefiltration bei einer Temperatur im Bereich von 30 bis 150° C, vorzugsweise von 40 bis 100° C, oberhalb der Flüssigkristallinen Schmelztemperatur durchgeführt wird.

**11.** Verfahren nach Anspruch 9 oder 10, dadurch gekennzeichnet, daß die Hochtemperaturschmelzefiltration bei einer Temperatur im Bereich von 300 bis 410 °C, vorzugsweise von 330 bis 400 °C durchgeführt wird.